# EUROPEAN PATENT APPLICATION

(11) **EP 4 415 127 A1**
(43) Date of publication of application: **14.08.2024**
(21) Application number: 23219342.5
(22) Date of filing: 21.12.2023
(51) Int. Cl.: H01M 50/148, H01M 50/176, H01M 50/188, H01M 50/55

(54) **POWER STORAGE DEVICE**

(30) Priority: 08.02.2023 JP 2023017767
(71) Applicant: Prime Planet Energy & Solutions, Inc., Chuo-ku Tokyo 103-0022 (JP)
(72) Inventor: OSHIMA, Kazuki, Tokyo, 103-0022 (JP)
(74) Representative: Kuhnen & Wacker Patent- und Rechtsanwaltsbüro PartG mbB

(57) **Abstract**

A power storage device disclosed herein includes: a case body having an opening part; a sealing plate having a terminal fit hole and closing the opening part; an electrode body accommodated inside the case body; a collector terminal having one end electrically connected to the electrode body inside the case body and the other end exposed on an outer surface side of the sealing plate through the terminal fit hole; and an insulating member arranged between the sealing plate and the collector terminal. The insulating member is arranged at a periphery of the terminal fit hole of the sealing plate while being molded integrally with a peripheral portion of the terminal fit hole and the collector terminal, and at least one part of the periphery of the terminal fit hole of the sealing plate forms a thin part thinner than a surrounding of the one part.

## Description

### BACKGROUND OF THE DISCLOSURE

### 1. Field

The present disclosure relates to a power storage device.

### 2. Background

Secondary batteries such as lithium ion secondary batteries and capacitors such as lithium ion capacitors belong to so-called power storage devices that become widely used as portable power sources for personal computers or mobile terminals, and also as power sources for driving vehicles such as plug-in hybrid electric vehicles (PHEV), hybrid electric vehicles (HEV), and battery electric vehicles (BEV).

Power storage devices for such purposes of use include a power storage device having a configuration where an electrode body having a positive electrode and a negative electrode is accommodated in a metallic case of a so-called square form having a hexahedron shape composed of rectangular six sides. As a typical example, a power storage device having such a configuration includes a square case body with an opened one side and a rectangular plate-like sealing plate (lid) sealing this opening part, and respective collector terminals for a positive electrode and a negative electrode electrically connected to the positive electrode and the negative electrode respectively of an electrode body to be accommodated in a case are passed through respective terminal fit holes for the positive electrode and the negative electrode provided at the sealing plate to locate parts of the terminals on an outer surface of the sealing plate.

A power storage device of this type includes a sealed power storage device prepared as follows. While an insulating member made of synthetic resin is arranged in advance at a peripheral portion of the terminal fit hole, an assembly with the sealing plate and the collector terminal (hereinafter called a "collector terminal-sealing plate assembly") is molded integrally using a predetermined die by fitting the collector terminal to the sealing plate while passing a part of the collector terminal through the fit hole. An electrode body having a predetermined shape is connected to the integrally-molded collector terminal-sealing plate assembly, and a resultant member is accommodated in a body of a case, and the sealing plate is joined to an opening part of the case.

For example, JP2021-86813A describes an example of a sealed power storage device (lithium ion secondary battery) manufactured by using such an integrally-molded collector terminal-sealing plate assembly.

### SUMMARY

A collector terminal-sealing plate assembly such as that described in JP2021-86813A has the following risk. It is likely that, as a result of the integral molding, rigidity will become higher at a part of the sealing plate molded integrally with the collector terminal and the insulating member than at a part composed only of the sealing plate (a part not involved in the integral molding). More specifically, in many cases, the sealing plate is fitted in the opening part of the case body and a surrounding of the sealing plate is welded for sealing the opening. Rigidity at the welded outer periphery of the sealing plate is not uniform around the sealing plate. It is likely that rigidity at a position close to a part where the collector terminal is molded integrally with the insulating member will become higher than rigidity at a position away from the part where the collector terminal is molded integrally with the insulating member. A relationship between the rigidity and the position at the outer periphery of the sealing plate after welding has a correlation. [0005]

If the sealing plate is subjected to a stress applied in a situation of some kind such as a situation where the case swells in response to use of the power storage device or a situation where load is applied from outside to the power storage device, the stress concentrates on a part of relatively low rigidity to cause a risk of reducing rupture strength at this part. It is not preferred that an excessive difference (a difference exceeding an acceptable range) in rigidity occurs in the outer periphery of the sealing plate.

The present disclosure has been made in view of the above points, and an object thereof is to provide a collector terminal-sealing plate assembly where a collector terminal and an insulating member such as those descried above are molded integrally with a sealing plate (more specifically, with a part thereof covering a peripheral portion of the terminal fit hole) and where a difference in rigidity is reduced between the integrally-molded part and a part of the sealing plate not involved in the integral molding. It is another aspect of the present disclosure to provide a power storage device constructed using the collector terminal-sealing plate assembly.

A power storage device disclosed herein includes: a case body having an opening part; a sealing plate having a terminal fit hole and sealing the opening part; an electrode body accommodated inside the case body; a collector terminal having one end electrically connected to the electrode body inside the case body and the other end exposed on an outer surface side of the sealing plate; and an insulating member arranged between the sealing plate and the collector terminal. The insulating member is arranged at a periphery of the terminal fit hole of the sealing plate while being molded integrally with a peripheral portion of the terminal fit hole and the collector terminal, and at least one part of the periphery of the terminal fit hole of the sealing plate forms a thin part thinner than a surrounding of the one part.

In order to solve the above-described problem, it is preferable that the difference between the rigidity of a portion close to the portion where the collector terminal is integrally molded with the terminal fit hole by the insulating member and the rigidity of a portion distant from the portion where the collector terminal is integrally molded with the terminal fit hole in the outer periphery of the sealing plate is within a reference difference (a permissible difference).

The power storage device of the above-descried configuration allows reduction in a difference in rigidity between a part where the sealing plate, the collector terminal, and the insulating member are molded integrally and a part not involved in the integral molding. This makes it possible to suppress stress concentration to achieve improvement of rupture strength. As a result, it is possible to provide the power storage device with a higher level of safety.

### BRIEF DESCRIPTION OF THE DRAWINGS

FIG. 1 is a perspective view schematically showing a battery according to an embodiment;
FIG. 2 is a view schematically showing an internal configuration of the battery according to an embodiment;
FIG. 3 is a view schematically showing the configuration of an electrode body;
FIG. 4 is a view schematically showing a collector terminal-sealing plate assembly where a sealing plate, a collector terminal, and an insulating member are molded integrally;
FIG. 5 is a sectional view schematically showing a collector terminal and the vicinity thereof according to a first embodiment;
FIG. 6 is a view schematically showing the electrode body on which a second collector unit is mounted;
FIG. 7 is a view schematically showing a molding die according to an embodiment;
FIG. 8 is a view according to a second embodiment and corresponding to FIG. 5;
FIG. 9 is a view according to a third embodiment and corresponding to FIG. 5;
FIG. 10 is a view according to a fourth embodiment and corresponding to FIG. 5; and
FIG. 11 is a plan view schematically showing a sealing plate according to the fourth embodiment.

### DETAILED DESCRIPTION OF THE PREFERRED EMBODIMENTS

Hereinafter, embodiments of a technology disclosed herein will be described by referring to the drawings. Any feature other than features specifically set forth in the present specification and necessary for carrying out the technology disclosed herein (such as a general configuration of and manufacturing process for a power storage device not characterizing the technology disclosed herein, for example) can be understood as a design matter that a person skilled in the art can address on the basis of conventional technology in the pertinent field. The technology disclosed herein can be carried out on the basis of a substance disclosed in the present specification and technical knowledge in the pertinent field. Each drawing is drawn schematically and dimensional relationships (length, width, thickness, etc.) do not necessarily reflect actual dimensional relationships. Moreover, in each drawing referred to below, members and parts having the same function will be given the same reference numerals, and redundant description thereof may be omitted or simplified. In addition, an expression "from A to B" indicating a range in the present specification (A and B are any numerical values) means a range equal to or greater than A and equal to or less than B.

In the present specification, a "power storage device" is a device where charging and discharging reactions occur in response to transfer of a charge carrier between electrodes in a pair (positive electrode and negative electrode) across an electrolyte. This power storage device includes: secondary batteries such as lithium ion secondary batteries, nickel hydride batteries, and nickel cadmium batteries; and capacitors such as lithium ion capacitors and electric double layer capacitors (namely, physical batteries).

Embodiments of the technology disclosed herein will be described below by using a lithium ion secondary battery as an example out of these power storage devices.

### <First Embodiment>

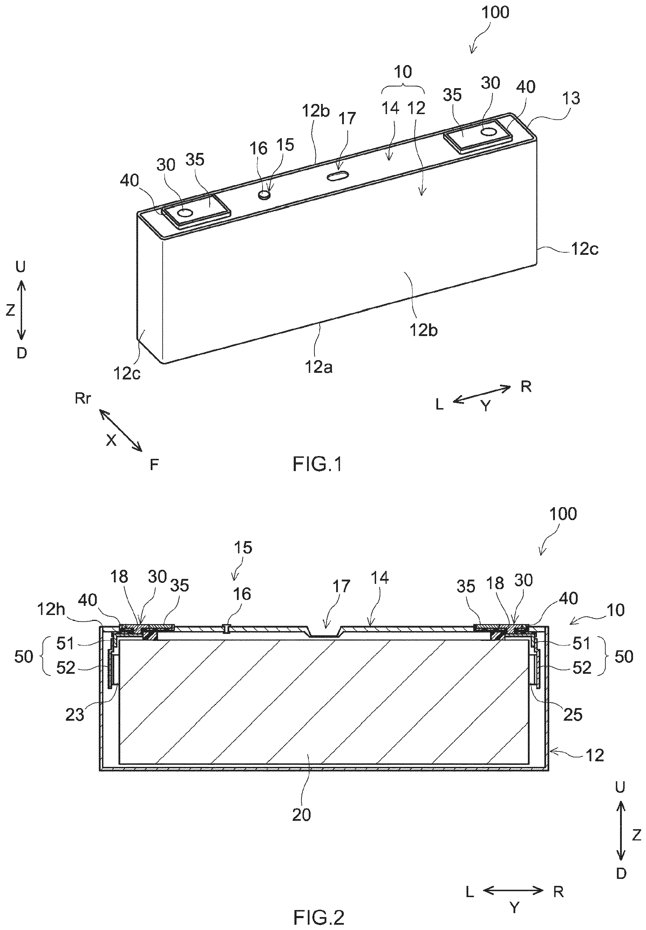

FIG. 1 is a perspective view of a secondary battery 100 according to the present embodiment. FIG. 2 is a view schematically showing an internal configuration of the secondary battery 100. In the following description, signs X, Y, and Z in the drawings indicate a short side direction of the secondary battery 100, and a long side direction perpendicular to the short side direction respectively, and a top-bottom direction. Furthermore, signs L, R, F, Rr, U, and D in the drawings indicate left, right, front, rear, up, and down respectively. However, these directions are defined for the convenience of description and are never intended to limit a way in which the secondary battery 100 is installed. Moreover, dimensional relationships (length, width, thickness, etc.) in each drawing do not necessarily reflect actual dimensional relationships.

As shown in FIGS. 1 and 2, the secondary battery 100 includes an electrode body 20, an electrolyte (not shown in the drawings), a case body 12 in which the electrode body 20 and the electrolyte are accommodated, a sealing plate 14, a collector terminal 30, and an insulating member 40.

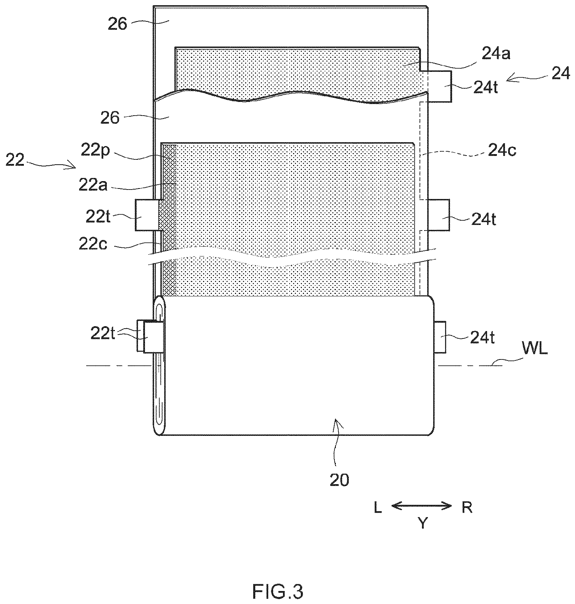

FIG. 3 is a view schematically showing the configuration of the electrode body 20. Here, as shown in FIG. 3, the electrode body 20 is a wound electrode body formed by laminating a strip-shape positive electrode sheet 22 and a strip-shape negative electrode sheet 24 on each other while insulation is provided therebetween across two strip-shape separators 26, and winding the laminated body about a winding axis WL in a lengthwise direction. Alternatively, the electrode body may be a laminated electrode body formed by laminating a square positive electrode sheet and a square negative electrode sheet on each other while insulation is provided therebetween across a square separator. Alternatively, the electrode body may be a laminated electrode body formed by laminating a square positive electrode sheet and a square negative electrode sheet on each other while insulation is provided therebetween across a serpentine separator.

As shown in FIG. 3, the positive electrode sheet 22 is an elongated strip-shape member. The configuration of the positive electrode sheet 22 is not particularly limited but can be similar to that used in a conventional publicly-known battery. For example, the positive electrode sheet 22 has a strip-shape positive electrode substrate 22c, and a positive electrode active material layer 22a and a positive electrode protective layer 22p arranged on at least one surface of the positive electrode substrate 22c. However, the positive electrode protective layer 22p is not essential but is omissible in other embodiments.

The positive electrode substrate 22c is an elongated strip-shape member. The positive electrode substrate 22c is composed of conductive metal such as aluminum, an aluminum alloy, nickel, or stainless steel, for example. Here, the positive electrode substrate 22c is metal foil, more specifically, aluminum foil. The size of the positive electrode substrate 22c is not particularly limited but can be determined properly in response to battery design. The positive electrode substrate 22c has one end portion in the long side direction Y (left end portion in FIG. 3) provided with a plurality of positive electrode tabs 22t. The positive electrode tabs 22t project further in the long side direction Y than the separator 26. The positive electrode tabs 22t are arranged at an interval (intermittently) in a lengthwise direction of the positive electrode substrate 22c. The positive electrode tab 22t forms part of the positive electrode substrate 22c and is composed of the metal foil (aluminum foil). The positive electrode active material layer 22a is formed in part of the positive electrode tab 22t. In at least part of the positive electrode tab 22t, the positive electrode active material layer 22a is not formed and the positive electrode substrate 22c is exposed. The positive electrode tabs 22t are laminated on one end portion of the long side direction Y (left end portion in FIG. 2) to form a positive electrode tab group 23. The positive electrode tabs 22t are folded and bent in such a manner as to align the respective outer edges thereof. The positive electrode tab group 23 is electrically connected to a positive electrode side collector terminal 30 across a collector 50.

As shown in FIG. 3, the positive electrode active material layer 22a is provided in a strip shape in the lengthwise direction of the positive electrode substrate 22c. The positive electrode active material layer 22a contains a positive electrode active material. The positive electrode active material to be used can be a publicly-known positive electrode active material used in lithium ion secondary batteries. As a specific example, the positive electrode active material to be used can be a lithium composite oxide or a lithium transition metal phosphate compound. These positive electrode active materials may each be used alone, or two or more types thereof may be used in combination. The positive electrode active material layer 22a may contain a component such as a conductive material or a binder, for example, other than the positive electrode active material. The conductive material to be used suitably may be carbon black such as acetylene black (AB) or other types of carbon materials (e.g., graphite), for example. The binder to be used may be polyvinylidene fluoride (PVDF), for example.

As shown in FIG. 3, the positive electrode protective layer 22p is provided at a boundary between the positive electrode substrate 22c and the positive electrode active material layer 22a in the long side direction Y. The positive electrode protective layer 22p may be a layer configured to be lower in electrical conductivity than the positive electrode active material layer 22a. Here, the positive electrode protective layer 22p is provided at one end portion of the positive electrode substrate 22c in the long side direction Y (left end portion in FIG. 3). Alternatively, the positive electrode protective layer 22p may be provided at the both end portions in the long side direction Y. The positive electrode protective layer 22p is provided in a strip shape along the positive electrode active material layer 22a. The positive electrode protective layer 22p contains an inorganic filler (alumina, for example). The positive electrode protective layer 22p may contain an optional component such as a conductive material, a binder, or each type of additive component, for example, other than the inorganic filler.

As shown in FIG. 3, the negative electrode sheet 24 is an elongated strip-shape member. The configuration of the negative electrode sheet 24 is not particularly limited but can be similar to that used in a conventional publicly-known battery. For example, the negative electrode sheet 24 has a negative electrode substrate 24c, and a negative electrode active material layer 24a arranged on at least one surface of the negative electrode substrate 24c.

The negative electrode substrate 24c is an elongated strip-shape member. The negative electrode substrate 24c is composed of conductive metal such copper, a copper alloy, nickel, or stainless steel, for example. Here, the negative electrode substrate 24c is metal foil, more specifically, copper foil. The size of the negative electrode substrate 24c is not particularly limited but can be determined properly in response to battery design. The negative electrode substrate 24c has one end portion in the long side direction Y (right end portion in FIG. 3) provided with a plurality of negative electrode tabs 24t. The negative electrode tabs 24t project further in the long side direction Y than the separator 26. The negative electrode tabs 24t are arranged at an interval (intermittently) in a lengthwise direction of the negative electrode sheet 24. The negative electrode tab 24t forms part of the negative electrode substrate 24c and is composed of the metal foil (copper foil). The negative electrode active material layer 24a is formed in part of the negative electrode tab 24t. In at least part of the negative electrode tab 24t, the negative electrode active material layer 24a is not formed and the negative electrode substrate 24c is exposed. The negative electrode tabs 24t are laminated on one end portion of the long side direction Y (right end portion in FIG. 2) to form a negative electrode tab group 25. The negative electrode tabs 24t are folded and bent in such a manner as to align the respective outer edges thereof. The negative electrode tab group 25 is electrically connected to a negative electrode side collector terminal 30 across a collector 50.

As shown in FIG. 3, the negative electrode active material layer 24a is provided in a strip shape in a lengthwise direction of the strip-shape negative electrode substrate 24c. The negative electrode active material layer 24a contains a negative electrode active material. While the negative electrode active material to be used is not particularly limited, it can be a carbon material such as graphite, hard carbon, or soft carbon, for example. The graphite may either be natural graphite or artificial graphite. The graphite may also be graphite coated with amorphous carbon having a configuration where graphite is coated with an amorphous carbon material. The negative electrode active material layer 24a may contain a component such as a binder or a thickening agent, for example, other than the negative electrode active material. The binder to be used may be styrene-butadiene rubber (SBR) or polyvinylidene fluoride (PVDF), for example. The thickening agent to be used may be carboxymethyl cellulose (CMC), for example.

The separator 26 is an insulating resin sheet with a plurality of fine through holes allowing a charge carrier to pass therethrough. The configuration of the separator 26 is not particularly limited but can be similar to that used in a conventional publicly-known battery. For example, the separator 26 is a porous sheet (film) composed of resin such as polyethylene (PE), polypropylene (PP), polyester, cellulose, or polyamide. A heat resistant layer (HRL) may be provided on a surface of the separator 26.

As described above, the secondary battery 100 includes the electrolyte. The electrolyte is not particularly limited but can be similar to that used in a conventional publicly-known battery. The electrolyte may contain a non-aqueous solvent (organic solvent) and an electrolytic salt (supporting salt), for example. For example, ethylene carbonate (EC), diethyl carbonate (DEC), dimethyl carbonate (DMC), or ethyl methyl carbonate (EMC) can be used as the non-aqueous solvent. Various lithium salts can be used as the supporting salt and in particular, lithium salts such as LiPF₆ and LiBF₄ are preferred. The electrolytic solution may contain various types of additives such as a film-forming agent, a gas generating agent, a dispersant, and a thickening agent, for example.

As shown in FIG. 1, a case 10 (here, battery case 10) includes the case body 12 and the sealing plate 14. Here, the battery case 10 has a rectangular solid (square) outer shape with a closed bottom. The battery case 10 can be formed using a conventional publicly-known material without any particular limitation. The battery case 10 (case body 12 and sealing plate 14) may be composed of aluminum, an aluminum alloy, stainless steel, iron, or an iron alloy, for example.

The case body 12 is a housing in which the electrode body 20 and the electrolyte are accommodated. The case body 12 is a square container with a closed bottom having one side surface (here, an upper surface) where an opening part 12h is provided (see FIG. 2). Here, the opening part 12h has a substantially rectangular shape. As shown in FIG. 1, the case body 12 includes a substantially rectangular bottom surface 12a in a plan view having long sides and short sides, longer walls 12b in a pair extending upward in the top-bottom direction Z from the long sides of the bottom surface 12a and facing each other, and shorter walls 12c in a pair extending upward in the top-bottom direction Z from the short sides of the bottom surface 12a and facing each other. The area of the shorter wall 12c is smaller than that of the longer wall 12b. While not particularly limited, the case body 12 has an average thickness (average plate thickness) that may generally be equal to or greater than 0.5 mm, for example, equal to or greater than 1 mm from the viewpoint of durability and the like. From the viewpoint of cost or energy density, the average plate thickness may generally be equal to or less than 3 mm and may be equal to or less than 2 mm, for example.

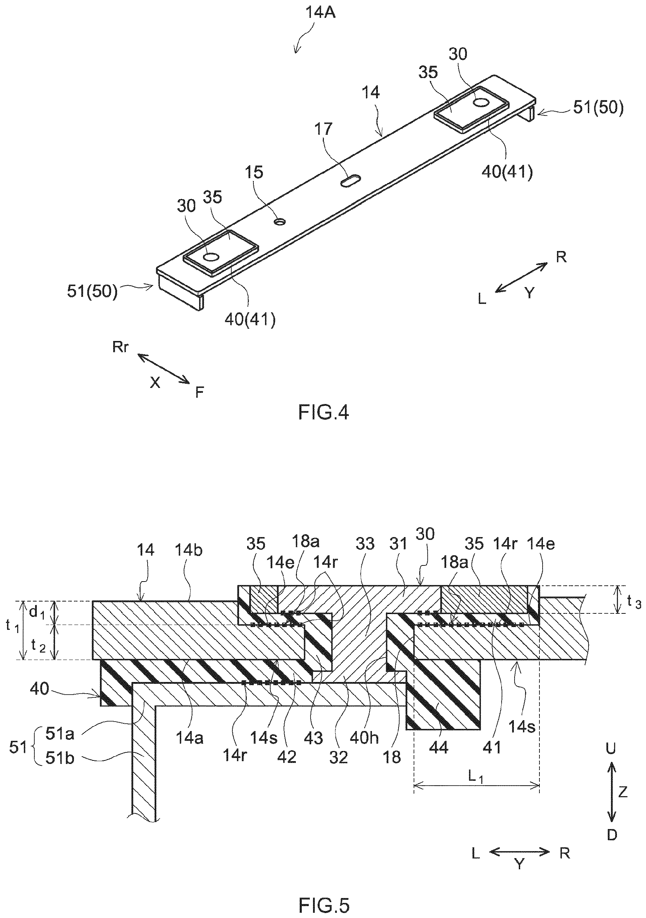

The sealing plate 14 is a member having a substantially rectangular shape in a plan view here, and used for closing the opening part 12h of the case body 12. An outer edge of the sealing plate 14 and a peripheral portion of the opening part 12h of the case body 12 are joined to each other (by weld connection, for example). The sealing plate 14 has an inner surface 14a (see FIG. 5) that is a surface on an inner side of the secondary battery 100 (a side facing the electrode body 20), and an outer surface 14b (see FIG. 5) that is a surface on an outer side of the secondary battery 100. As shown in FIG. 1, the sealing plate 14 faces the bottom surface 12a of the case body 12.

As shown in FIG. 2, the sealing plate 14 has two terminal fit holes 18 penetrating the sealing plate 14 in a thickness direction. The terminal fit holes 18 are provided one by one at opposite end portions of the sealing plate 14 in the long side direction Y. The terminal fit hole 18 on one side (left side in FIG. 2) is for a positive electrode and the terminal fit hole 18 on the other side (right side in FIG. 2) is for a negative electrode. Here, the shape of the terminal fit hole 18 in a plan view is a substantially perfect circle shape. Alternatively, the terminal fit hole 18 may have an oval shape or a polygonal shape such as a quadrangular shape or a hexagonal shape in a plan view. The shape of the terminal fit hole 18 may be selected properly in conformity with the shape of the collector terminal 30.

The sealing plate 14 is provided with a liquid filling hole 15 and a gas exhaust valve 17. The liquid filling hole 15 is a through hole through which an electrolytic solution is filled into the battery case 10 after the sealing plate 14 is incorporated with the case body 12. The liquid filling hole 15 is sealed with a sealing member 16 after filling of the electrolytic solution. The gas exhaust valve 17 is configured to rupture if a pressure in the battery case 10 becomes equal to or greater than a predetermined value, thereby exhausting gas in the battery case 10 to the outside.

While not particularly limited, the sealing plate 14 has an average thickness t₁ (an average plate thickness of the sealing plate not including a thin part described later, and the same applies to the following) that may be equal to or greater than 0.3 mm, for example, equal to or greater than 0.5 mm from the viewpoint of durability and the like. From the viewpoint of cost or energy density, the average plate thickness may be equal to or less than 4 mm and may be equal to or less than 3 mm, for example. The average thickness of the sealing plate 14 may be smaller than an average thickness of the case body 12.

As shown in FIG. 1, the outer edge of the sealing plate 14 and the peripheral portion of the opening part 12h of the case body 12 are weld connected to each other to form a welded part 13 along a boundary (fit part) between the case body 12 and the sealing plate 14. The opening part 12h of the case body 12 is closed tightly with the sealing plate 14, allowing the battery case 10 to be sealed hermetically. The welded part 13 may be formed by weld connection such as laser welding, for example. The welded part 13 is a part formed by melting of metal forming the case body 12 and melting of metal forming the sealing plate 14 resulting from laser welding of the fit part between the case body 12 and the sealing plate 14. The welded part 13 is located on an outer surface side of the sealing plate 14. At the welded part 13, an inner periphery of the opening part 12h of the case body 12 and an outer periphery of the sealing plate 14 are coupled to each other in such a manner as to be flush with each other. The welded part 13 is formed along an entire perimeter of the fit part between the sealing plate 14 and the case body 12.

As shown in FIG. 2, the collector terminals 30 are provided one by one at the opposite end portions of the sealing plate 14 in the long side direction Y. The collector terminal 30 arranged on one side of the sealing plate 14 in the long side direction Y (left side in FIG. 2) is for a positive electrode, and the collector terminal 30 arranged on the other side (right side in FIG. 2) is for a negative electrode. The collector terminal 30 is inserted in the terminal fit hole 18 of the sealing plate 14. Preferably, the collector terminal 30 is composed of metal. Preferably, the collector terminal 30 for a positive electrode (namely, a positive electrode terminal) contains aluminum as a principal component. More specifically, the collector terminal 30 for a positive electrode is more preferably composed of aluminum or an aluminum alloy. Meanwhile, the collector terminal 30 for a negative electrode (namely, a negative electrode terminal) preferably contains copper as a principal component. More specifically, the collector terminal 30 for a negative electrode is more preferably composed of copper or a copper alloy, for example. Alternatively, the collector terminal 30 may be configured by joining and integrating two conductive members. For example, the positive electrode side collector terminal 30 may be configured by joining two different types of aluminum. A part of the collector terminal 30 for a negative electrode to be connected to the collector 50 may be composed of copper or a copper alloy, and a part thereof to be exposed on the outer surface 14b of the sealing plate 14 may be composed of aluminum or an aluminum alloy. The collector terminal 30 may be configured using a clad material composed of two metals, for example.

In the present specification, "containing A as a principal component" means that, of components forming the collector terminal, A is a maximum component based on mass.

The collector terminal 30 is electrically connected to the plate-like external conductive member 35 outside the battery case 10. The external conductive member 35 is a member where a bus bar is to be provided in connecting a plurality of secondary batteries electrically. Preferably, the external conductive member 35 is composed of metal and more preferably, composed of aluminum or an aluminum alloy, for example. However, the external conductive member 35 is not essential but is omissible in other embodiments.

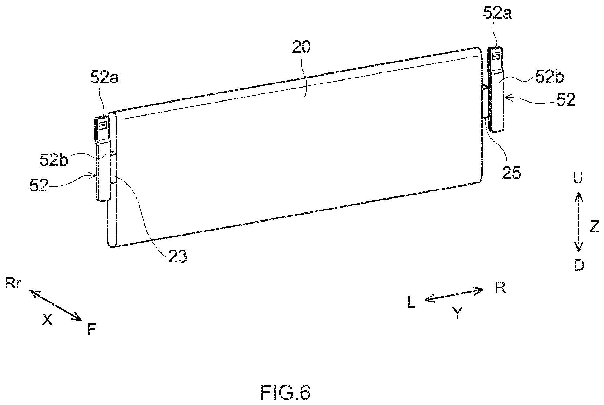

FIG. 4 is a view schematically showing a collector terminal-sealing plate assembly 14A where the sealing plate 14, the collector terminal 30, and the insulating member 40 are molded integrally. FIG. 5 is a schematic sectional view of the collector terminal 30 and the vicinity thereof according to the first embodiment. FIG. 6 is a view schematically showing the electrode body 20 on which a second collector unit 52 is mounted. As shown in FIG. 4, the power storage device disclosed herein includes the collector terminal-sealing plate assembly 14A where the sealing plate 14, the collector terminal 30, and the insulating member 40 are molded integrally. In FIG. 4, the collector 50 is molded integrally in addition to the sealing plate 14, the collector terminal 30, and the insulating member 40.

As shown in FIG. 5, the collector terminal 30 is arranged in such a manner that a sealing plate outer surface side 31 thereof is exposed on an outer surface side of the sealing plate 14. The collector terminal 30 is arranged in such a manner that a sealing plate inner surface side 32 thereof is exposed on an inner surface side of the sealing plate 14. In the illustrated example in FIG. 5, the collector terminal 30 is formed into a size allowing the sealing plate inner surface side 32 to be inserted in the terminal fit hole 18. By doing so, it becomes possible to perform integral molding (insert molding) described later favorably. In another case, the collector terminal 30 may be formed into a size allowing the sealing plate outer surface side 31 to be inserted in the terminal fit hole 18. The shape of the sealing plate outer surface side 31 of the collector terminal 30 in a plan view is not particularly limited. The shape of the sealing plate outer surface side 31 in a plan view may be a polygonal shape such as a triangular shape, a quadrangular shape, or a hexagonal shape, or may be a perfect circle shape or an oval shape.

The collector terminal 30 is connected to the electrode body 20 across the collector 50 inside the battery case 10. More specifically, the positive electrode side collector 50 connects the positive electrode tab group 23 and the positive electrode side collector terminal 30 to each other. The negative electrode side collector 50 connects the negative electrode tab group 25 and the negative electrode side collector terminal 30 to each other. As shown in FIG. 2, the collector 50 includes a first collector unit 51 and the second collector unit 52. The first collector unit 51 and the second collector unit 52 may be composed of metal having conductivity such as aluminum, an aluminum alloy, nickel, or stainless steel, for example.

As shown in FIG. 5, the first collector unit 51 is arranged on the inner surface side of the sealing plate 14. The first collector unit 51 has a first region 51a and a second region 51b. The first collector unit 51 may be formed by folding a single member by press working, for example, or may be formed by integrating a plurality of members by weld connection, for example. The first collector unit 51 is joined to a lower end portion of the collector terminal 30. The first collector unit 51 and the collector terminal 30 are joined to each other by welding such as ultrasonic welding, resistance welding, or laser welding, for example. Alternatively, the first collector unit 51 may be joined by being molded integrally with the sealing plate 14 together with the collector terminal 30 in an integral molding step described later. The first collector unit 51 and the collector terminal 30 may also be joined to each other by mechanical working such as swaging (riveting).

The first region 51a of the first collector unit 51 is a region arranged between the sealing plate 14 and the electrode body 20. The first region 51a extends in the long side direction Y. The first region 51a extends horizontally along the inner surface 14a of the sealing plate 14. As shown in FIG. 5, the insulating member 40 is arranged between the sealing plate 14 and the first region 51a. The first region 51a is insulated from the sealing plate 14 by the insulating member 40. The first region 51a is connected to the sealing plate inner surface side 32 of the collector terminal 30. The second region 51b extends downward in the top-bottom direction Z from one end portion of the first region 51a in the long side direction Y (left end portion in FIG. 5) along the shorter wall 12c of the case body 12. As shown in FIG. 2, the second region 51b is connected to the second collector unit 52.

As shown in FIG. 2, the second collector unit 52 extends along the shorter wall 12c of the case body 12. As shown in FIG. 6, the second collector unit 52 has a first connection 52a connecting to the first collector unit 51, and a second connection 52b connecting to the positive electrode tab group 23 or the negative electrode tab group 25. The first connection 52a and the first collector unit 51 are weld connected to each other by ultrasonic welding, resistance welding, or laser welding, for example. The second connection 52b is a part attached to the positive electrode tab group 23 or the negative electrode tab group 25 and electrically connected to the positive electrode tabs 22t or the negative electrode tabs 24t. As shown in FIG. 6, the second connection 52b extends in the top-bottom direction Z. The second connection 52b is arranged substantially vertically to the winding axis WL of the electrode body 20. A surface of the second connection 52b connected to the positive electrode tabs 22t is arranged substantially parallel to the shorter wall 12c of the case body 12. The second connection 52b is weld connected to the positive electrode tab group 23 or the negative electrode tab group 25 by ultrasonic welding, resistance welding, or laser welding, for example.

The insulating member 40 is a member that prevents electrical continuity between the sealing plate 14 and the collector terminal 30. As shown in FIG. 5, the insulating member 40 is arranged at a periphery 18a of the terminal fit hole 18 of the sealing plate 14 while being molded integrally with a peripheral portion of the terminal fit hole 18 and the collector terminal 30. In the present specification, "the periphery of the terminal fit hole" includes not only an edge of the terminal fit hole but also a region around the edge. More specifically, the periphery of the terminal fit hole includes a region within 10 mm (for example, within 5 mm) from an end (edge) of the terminal fit hole.

The insulating member 40 is composed of a fluorine-based resin such as perfluoroalkoxy alkane (PFA) or polytetrafluoroethylene (PTFE) or a synthetic resin material such as polyphenylene sulfide (PPS). Of these materials, the insulating member 40 is preferably composed of polyphenylene sulfide for reason that this material makes it possible to ensure sufficient joint strength.

As shown in FIG. 5, the insulating member 40 includes a first flange part 41, a second flange part 42, a cylindrical part 43, and a projecting part 44. The first flange part 41, the second flange part 42, the cylindrical part 43, and the projecting part 44 are formed integrally. The insulating member 40 has a through hole 40h penetrating the insulating member 40 in the top-bottom direction Z at a position corresponding to the terminal fit hole 18 of the sealing plate 14. The first flange part 41 is arranged on the outer surface side of the sealing plate 14 to insulate the sealing plate outer surface side 31 of the collector terminal 30 and the outer surface 14b of the sealing plate 14 from each other. As shown in FIG. 4, the first flange part 41 projects further externally than the collector terminal 30 in a plan view and is exposed to the outside. The second flange part 42 is arranged on the inner surface side of the sealing plate 14 to insulate the sealing plate inner surface side 32 of the collector terminal 30 and the inner surface 14a of the sealing plate 14 from each other. The second flange part 42 extends in a horizontal direction along the inner surface 14a of the sealing plate 14. The first flange part 41 and the second flange part 42 have outer shapes larger than the outer shapes of the sealing plate outer surface side 31 and the sealing plate inner surface side 32 of the collector terminal 30 respectively.

The cylindrical part 43 is located between the terminal fit hole 18 and a shaft part 33 of the collector terminal 30. The cylindrical part 43 insulates the terminal fit hole 18 and the shaft part 33 from each other. As shown in FIG. 5, the projecting part 44 is provided closer to the center of the sealing plate 14 than the second flange part 42 in the long side direction Y. The projecting part 44 extends downward in the top-bottom direction Z from one end portion of the second flange part 42 in the long side direction Y (right end portion in FIG. 5). The projecting part 44 may face a bent part of the electrode body 20. Thus, even if the electrode body 20 moves to some extent in response to application of vibration or impact during use of the secondary battery 100, it is still possible to reduce a likelihood that the electrode body 20 will contact the sealing plate 14 directly.

The power storage device disclosed herein includes the collector terminal-sealing plate assembly 14A where the sealing plate 14, the collector terminal 30, and the insulating member 40 are molded integrally. In the collector terminal-sealing plate assembly 14A, the insulating member 40 is molded integrally with the peripheral portion of the terminal fit hole 18 of the sealing plate 14 and the collector terminal 30. The insulating member 40 is arranged at least in one part of the periphery 18a of the terminal fit hole 18 of the sealing plate 14. The sealing plate 14 has a thin part 14s thinner than a surrounding of the one part. This makes it possible to increase the rupture strength of the battery as a whole, so that the secondary battery 100 with a higher level of safety can be provided.

The reason for fulfilling such effect is estimated as follows while this estimation is not intended to limit the technology disclosed herein. The collector terminal-sealing plate assembly 14A is joined firmly in order for joint strength to satisfy a predetermined criterion. Here, apparent rigidity is increased sharply at a part of the sealing plate 14 molded integrally with the collector terminal 30 and the insulating member 40. Specifically, rigidity is high at the part molded integrally with the collector terminal 30 and the insulating member 40 while rigidity is relatively low at a part not involved in the integral molding (a part composed only of the sealing plate 14). Examination conducted by the present inventors shows that, at a boundary between the part of high rigidity and the part of low rigidity, stress concentrates in the part of low rigidity so rupture is caused easily particularly in this part. More specifically, at a boundary between the case body 12 and the sealing plate 14 (at the welded part 13, for example), a difference in rigidity is caused easily between a position close to the integrally-molded part and a position away from the integrally-molded part. At the position close to the integrally-molded part, a large difference in rigidity occurs from the integrally-molded part, so that rupture is likely to occur easily at this position. In response to this, in the secondary battery 100 disclosed herein, in order to increase the rupture strength of the secondary battery 100 by reducing a difference between rigidity at the integrally-molded part and rigidity at the part not integrally molded, at least one part of the periphery 18a of the terminal fit hole 18 forms the thin part 14s thinner than a surrounding of the one part. By doing so, it becomes possible to suppress stress concentration to provide the secondary battery 100 with a higher level of safety.

The thin part 14s is provided at the periphery 18a of the terminal fit hole 18 of the sealing plate 14. The thin part 14s is arranged at a region where the sealing plate 14 and the insulating member 40 contact each other. The thin part 14s is a part where the sealing plate 14 has a smaller thickness than in a region near the thin part 14s. The thin part 14s may be a part where the volume of the sealing plate 14 is relatively small.

The thin part 14s may be formed continuously or intermittently. The thin part 14s may be formed in a dash-line pattern or may be formed into a plurality of separated sections. The thin part 14s may be a part formed into a smaller sectional area than a surrounding of the thin part 14s in the sealing plate 14. In the sealing plate 14, providing the thin part 14s in at least one part of the periphery 18a of the terminal fit hole 18 makes it possible to reduce a difference in rigidity between the integrally-molded part and the part not involved in the integral molding. By doing so, stress concentration in a region of relatively low rigidity is suppressed so the occurrence of rupture of the battery case 10 can be reduced, making it possible to improve the rupture strength of the battery.

In the illustrated example in FIG. 5, the thin part 14s is a region having a predetermined thickness t₂ at the periphery 18a of the terminal fit hole 18. The thickness t₂ of the thin part 14s is not particularly limited. Meanwhile, relative to the average thickness t₁ of the sealing plate 14, the thickness t₂ is preferably (1/10) × t₁ ≤ t₂ < t₁, more preferably, (1/8) × t₁ ≤ t₂ < t₁, still more preferably, (1/5) × t₁ ≤ t₂ < (4/5) × t₁. As a specific example, the thickness t₂ of the thin part 14s is preferably from 0.1 to 1 mm and may be from 0.1 to 0.5 mm, for example.

As shown in FIG. 5, in the first embodiment, the thin part 14s includes, on the outer surface side of the sealing plate 14, a portion (hereinafter called a "first groove portion 14e") formed in a groove shape recessed from a surrounding of the portion. Here, as shown in FIG. 5, the first groove portion 14e has a shape recessed to a predetermined groove depth d₁ from the outer surface side toward the inner surface side of the sealing plate 14. The first groove portion 14e may be formed into a substantially ring-like shape along the edge of the terminal fit hole 18. The first groove portion 14e is a portion where a region having the predetermined groove depth d₁ extends to a predetermined length L₁ in a radial direction at the periphery 18a of the terminal fit hole 18. By providing the first groove portion 14e recessed from the surrounding of the first groove portion 14e at the periphery 18a of the terminal fit hole 18 of the sealing plate 14 and on the outer surface side of the sealing plate 14, it becomes possible to reduce rigidity at the integrally-molded part. This makes it possible to reduce a difference in rigidity between the integrally-molded part and the part not involved in the integral molding.

As shown in FIG. 5, a part of the sealing plate outer surface side 31 of the collector terminal 30 is preferably arranged in the first groove portion 14e. The first groove portion 14e has a groove shape. The part of the sealing plate outer surface side 31 of the collector terminal 30 is arranged at a position facing the first groove portion 14e of the sealing plate 14 across the insulating member 40. In the collector terminal-sealing plate assembly 14A, apparent rigidity is likely to become high particularly in a region where the sealing plate 14 and the collector terminal 30 face each other. The apparent rigidity can be reduced by providing the sealing plate 14 with the first groove portion 14e in this region to reduce a total volume of the sealing plate 14 and the collector terminal 30. Thus, by providing the thin part 14s including the first groove portion 14e at the periphery 18a of the terminal fit hole 18 and on the outer surface 14b of the sealing plate 14 and arranging a part of the collector terminal 30 in the first groove portion 14e, it becomes possible to reduce a difference in rigidity in the collector terminal-sealing plate assembly 14A, thereby achieving improvement of rupture strength.

As shown in FIG. 5, if the secondary battery 100 includes the external conductive member 35 and the collector terminal 30 and the external conductive member 35 are connected to each other, at least a part of the external conductive member 35 is preferably arranged in the first groove portion 14e. More preferably, the external conductive member 35 is arranged in the first groove portion 14e in an entire region where the external conductive member 35 and the sealing plate 14 face each other. As a result, even in the presence of the external conductive member 35, a total volume of the sealing plate 14 and the external conductive member 35 is still reduced to allow reduction in a difference in rigidity in the collector terminal-sealing plate assembly 14A.

The maximum groove depth d₁ of the first groove portion 14e (a maximum length in a direction conforming to the thickness direction of the sealing plate 14) may be set properly in response to battery design and is not particularly limited. For example, with an average thickness of the sealing plate outer surface side 31 of the collector terminal 30 (an average length in the top-bottom direction Z) defined as t₃, the groove depth d₁ of the first groove portion 14e is preferably d₁ ≥ (1/5) × t₃, more preferably, d₁ ≥ (1/2) × t₃, and may be d₁ = t₃ (namely, the groove depth d₁ of the first groove portion 14e is equal to the thickness t₃ of the sealing plate outer surface side 31). By setting the groove depth d₁ of the first groove portion 14e equal to or greater than 1/5 of the thickness t₃ of the sealing plate outer surface side 31, the foregoing effect by reducing the total volume can be exerted sufficiently, making it possible to suppress an increase in apparent rigidity favorably. On the other hand, the excessively large groove depth d₁ is not preferred as it makes it difficult for the collector terminal 30 (or external conductive member 35) to connect to the bus bar. From this viewpoint, d₁ ≤ t₃ is preferred, and d₁ ≤ (3/4)t₃ is more preferred. As a specific example, the groove depth d₁ of the first groove portion 14e may approximately be from 0.2 to 1.9 mm (preferably, from 0.5 to 1 mm).

The maximum length L₁ of the first groove portion 14e in the radial direction is not particularly limited but is preferably a length allowing the sealing plate outer surface side 31 of the collector terminal 30 to be arranged in the first groove portion 14e. If the secondary battery 100 has the external conductive member 35 and the collector terminal 30 and the external conductive member 35 are connected to each other, the maximum length L₁ of the first groove portion 14e is preferably a length allowing the sealing plate outer surface side 31 of the collector terminal 30 and the external conductive member 35 to be arranged in the first groove portion 14e. As a specific example, the maximum length L₁ of the first groove portion 14e may be from 1 to 10 mm (preferably, from 2 to 8 mm), for example.

In the collector terminal-sealing plate assembly 14A, a roughened area 14r resulting from roughening treatment is preferably arranged in at least a part of surfaces of the sealing plate 14 and the collector terminal 30. The roughening treatment is a surface treatment of forming irregularities on a surface to increase a surface area and enhance an anchor effect, thereby improving performance of joining or tight contact between the insulating member 40 and the sealing plate 14. Thus, the roughened area 14r is an area with more irregularities than a surrounding of the roughened area 14r.

The roughened area 14r may be provided in the sealing plate 14. Preferably, the roughened area 14r is provided in at least a part of a surface of the thin part 14s contacting the insulating member 40, for example. The roughened area 14r may be provided in the surface of the thin part 14s entirely where the thin part 14s and the insulating member 40 contact each other. In the roughened area 14r, the anchor effect is fulfilled as described above so rigidity is likely to increase particularly in the roughened area 14r. Arranging the roughened area 14r and the thin part 14s at positions overlapping each other makes it possible to reduce a difference in rigidity in the collector terminal-sealing plate assembly 14A. This allows improvement of rupture strength while ensuring joining performance or hermeticity of the collector terminal-sealing plate assembly 14A sufficiently, making it possible to provide a power storage device with more excellent safety.

The roughened area 14r may be arranged in the collector terminal 30. If the roughened area 14r is provided in the collector terminal 30, the roughened area 14r is preferably arranged at a position at least overlapping the thin part 14s in the top-bottom direction Z. For example, the roughened area 14r is preferably provided in a surface of the sealing plate outer surface side 31 of the collector terminal 30 and at a position facing the sealing plate 14 across the insulating member 40. This makes it possible to realize improvement of hermeticity of the collector terminal-sealing plate assembly 14A and improvement of rupture strength of the battery.

While not particularly limited, the roughened area 14r may be arranged in both the sealing plate 14 and the collector terminal 30. For example, the roughened area 14r is preferably provided in the surface of the thin part 14s contacting the insulating member 40 and in the surface of the sealing plate outer surface side 31 of the collector terminal 30 and at the position facing the thin part 14s across the insulating member 40. This makes it possible to reduce a difference in rigidity in the collector terminal-sealing plate assembly 14A while further ensuring performance of joining or hermeticity between the collector terminal 30 and the sealing plate 14.

While not particularly limited, the roughened area 14r may be arranged in the collector 50. More specifically, the roughened area 14r is preferably provided in a surface of the first collector unit 51 and at a position facing the thin part 14s across the insulating member 40. This makes it possible to reduce rigidity favorably in a region where the collector terminal 30, the sealing plate 14, and the collector 50 overlap each other while improving performance of joining between the collector 50 and the insulating member 40, thereby achieving improvement of rupture strength.

Preferably, the thin part 14s is arranged at each of the respective peripheries 18a of the two terminal fit holes 18. By doing so, a difference in rigidity in the sealing plate 14 can be reduced more properly. While not particularly limited, if the negative electrode side collector terminal 30 contains copper as a principal component and the positive electrode side collector terminal 30 contains aluminum as a principal component, it is preferable that a thin part provided at the periphery 18a of the negative electrode side terminal fit hole 18 be thinner (smaller in thickness) than a thin part arranged at the periphery 18a of the positive electrode side terminal fit hole 18. Examination conducted by the present inventors shows that strength is likely to be higher at the negative electrode side collector terminal 30 containing copper as a principal component than at the positive electrode side collector terminal 30 containing aluminum as a principal component. Thus, apparent rigidity is likely to be higher at the periphery 18a of the negative electrode side terminal fit hole 18 than at the periphery 18a of the positive electrode side terminal fit hole 18. For this reason, a difference in rigidity in the sealing plate 14 may be reduced by making the thin part provided at the periphery 18a of the negative electrode side terminal fit hole 18 thinner than the thin part provided at the periphery 18a of the positive electrode side terminal fit hole 18.

### <Method of Manufacturing Power Storage Device>

A lithium ion secondary battery will be described below as an example of a preferred embodiment of a method of manufacturing the power storage device disclosed herein. However, this is not intended to limit a target of application of the method to such a battery.

The method of manufacturing the secondary battery 100 may include a step of preparing the sealing plate 14, the collector terminal 30, and other required members, a step of integrally molding the sealing plate 14 and the collector terminal 30, and a step of assembling the collector terminal-sealing plate assembly 14A resulting from the integral molding and the case body 12. The method may include a different additional step in an optional stage.

In the preparing step, the sealing plate 14, the collector terminal 30, and the electrode body 20 are prepared. The collector terminal 30 prepared here is a terminal with the sealing plate inner surface side 32 capable of being inserted in the terminal fit hole 18. The thin part 14s can be formed by a conventional publicly-known process such as press working, cutting, or laser machining, for example.

The electrode body 20 can be produced by following a publicly-known method. As shown in FIG. 3, if the electrode body 20 is a wound electrode body, the wound electrode body can be prepared as follows, for example. First, the strip-shape positive electrode sheet 22 and the strip-shape negative electrode sheet 24 are laminated on each other while insulation is provided therebetween across the two strip-shape separators 26. At this time, the positive electrode sheet 22 and the negative electrode sheet 24 are superimposed on each other in such a manner that the positive electrode tab 22t of the positive electrode sheet 22 and the negative electrode tab 24t of the negative electrode sheet 24 stick out from the end portions of the two separators 26 in the long side direction Y toward directions opposite to each other. Next, the prepared laminated body is wound in the lengthwise direction about a winding axis. The laminated body can be wound by following a publicly-known method. The wound laminated body is pressed to produce a wound electrode body having a flat shape. This pressing is not particularly limited but can be performed using a publicly-known press unit used in manufacturing a general wound electrode body having a flat shape. In this way, the electrode body 20 can be prepared.

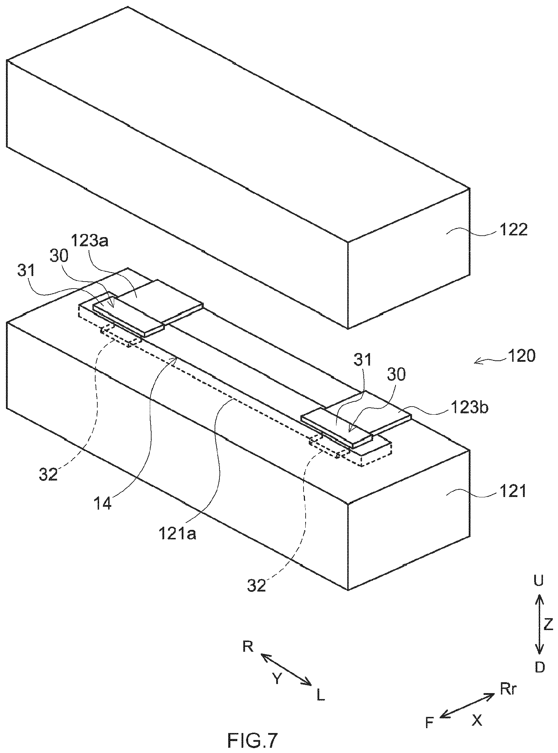

FIG. 7 is a view schematically showing a molding die 120. In the integral molding step, the sealing plate 14 and the collector terminal 30 are integrated with each other through insert molding to produce the collector terminal-sealing plate assembly 14A. The insert molding can be performed by following a publicly-known method. More specifically, the insert molding can be performed using the molding die 120 with a lower die 121 and an upper die 122 such as those shown in FIG. 7 and by following a method including a component setting step, a positioning step, an upper die setting step, an injection molding step, an upper die releasing step, and a component extracting step.

In the component setting step, the sealing plate 14 and the collector terminal 30 are loaded into the molding die 120. First, the collector terminal 30 is inserted into the terminal fit hole 18 of the sealing plate 14. As described above, the collector terminal 30 is formed into a size allowing the sealing plate inner surface side 32 to be inserted in the terminal fit hole 18. Thus, the collector terminal 30 is inserted into each of the two terminal fit holes 18 from the sealing plate inner surface side 32. Then, the sealing plate 14 with the collector terminal 30 inserted in each of the two terminal fit holes 18 is loaded into a recess 121a of the lower die 121.

In the positioning step, the sealing plate 14 and the collector terminal 30 are placed into positions. After the sealing plate 14 and the collector terminal 30 are loaded in the lower die 121, the positioning step is started in response to predetermined operation such as switch depression, for example. More specifically, in response to the predetermined operation such as switch depression, a slide member 123a and a slide member 123b at backward retreating positions move forward. Then, the collector terminals 30 are caught by the respective slide members 123a and 123b. The collector terminals 30 are supported by the respective slide members 123a and 123b and located at intended positions.

In the upper die setting step, the upper die 122 is set in such a manner as to interpose the sealing plate 14 and the collector terminal 30 in the top-bottom direction Z placed in the lower die 121. While not shown in the drawings, the upper die 122 may have a seal part to abut on the lower die 121, a resin supplier to supply resin, and a recess into which the supplied resin is to flow. The recess of the upper die 122 is arranged in such a manner as to face the recess 121a of the lower die 121 across the sealing plate 14 and the collector terminal 30.

In the injection molding step, resin is supplied (injected) from the resin supplier to mold the sealing plate 14 and the collector terminal 30 integrally. In the injection molding step, the molding die 120 is heated first. While a heating temperature is not particularly limited as it differs according to a resin type, it may approximately be from 100 to 200°C, for example. After heating of the molding die 120 is finished, melted resin is supplied from the resin supplier. The supplied resin is filled into the recess of the upper die 122 and further filled into the recess 121a of the lower die 121 through the terminal fit hole 18. Then, the molding die 120 and the molded item are cooled. By doing so, the sealing plate 14 and the collector terminal 30 can be molded integrally.

In the upper die releasing step, the upper die 122 moves up to be separated from the lower die 121. Next, in the component extracting step, the molded item is detached from the lower die 121. As a result, the collector terminal-sealing plate assembly 14A can be produced where the collector terminal 30 and the sealing plate 14 are molded integrally. A step of removing burrs occurring during the molding may be performed after the component extracting step.

In the assembling step, while the prepared electrode body 20 is accommodated inside the case body 12, the collector terminal-sealing plate assembly 14A is mounted on the case body 12 and the case body 12 is closed. More specifically, first, the second collector unit 52 and the electrode body 20 are connected to each other. Next, the first collector unit 51 is mounted on the collector terminal 30 of the collector terminal-sealing plate assembly 14A. Then, the first collector unit 51 and the second collector unit 52 are connected to each other. By doing so, it becomes possible to connect the collector terminal-sealing plate assembly 14A and the electrode body 20 to each other. The electrode body 20 mounted on the collector terminal-sealing plate assembly 14A is inserted through the opening part 12h of the case body 12. At this time, the electrode body 20 may be inserted in such a manner as to be placed inside the case body 12 in a direction in which the winding axis WL of the electrode body 20 extends along the bottom surface 12a (specifically, in a direction in which the winding axis WL extends parallel to the long side direction Y). While the electrode body 20 is accommodated inside the case body 12, the collector terminal-sealing plate assembly 14A and the periphery of the opening part 12h of the case body 12 are joined to each other by laser welding, for example. Then, the electrolytic solution is filled from the liquid filling hole 15 and the liquid filling hole 15 is sealed with the sealing member 16, thereby hermetically sealing the secondary battery 100. In this way, the secondary battery 100 can be manufactured.

### <Purpose of Use of Battery>

The power storage device is available for various purposes of use and can be used suitably as a power source (driving power source) for motors installed on vehicles such as passenger cars or trucks, for example. While a vehicle type is not particularly limited, examples thereof include plug-in hybrid electric vehicles (PHEV), hybrid electric vehicles (HEV), and battery electric vehicles (BEV), for example. The power storage device is also used suitably in a configuration formed by arranging a plurality of such power storage devices in a predetermined arrangement direction and applying a load in the arrangement direction from a binding mechanism (for example, an assembled battery configured by arranging a plurality of lithium ion secondary batteries in a predetermined direction).

The foregoing embodiment is merely an example of the power storage device disclosed herein. The technology disclosed herein can be carried out in various other embodiments. Other embodiments of the technology disclosed herein will be described below.

### <Second Embodiment>

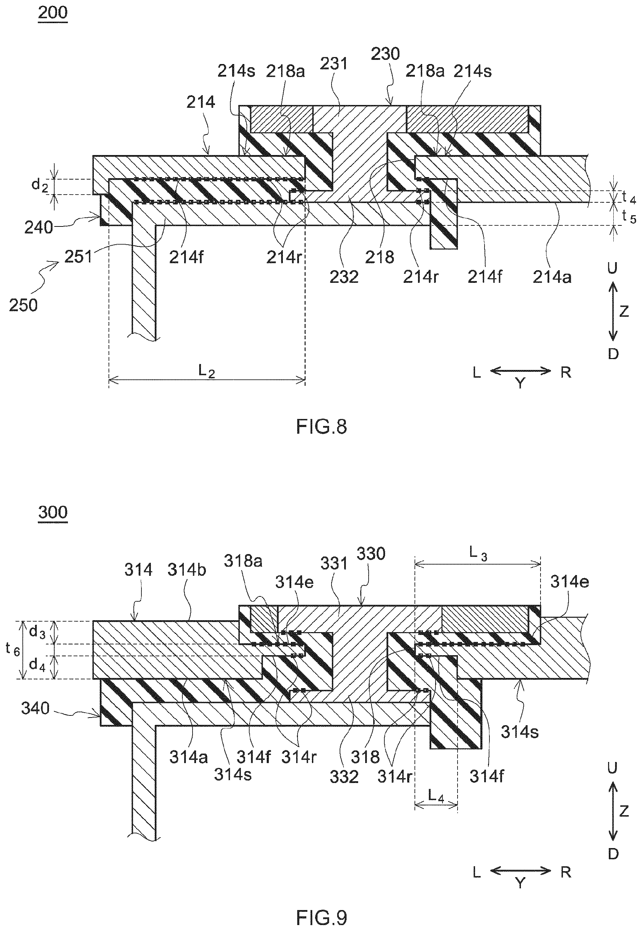

As an example, in the first embodiment, the thin part 14s includes a portion (first groove portion 14e) formed on the outer surface side of the sealing plate 14 into a groove shape recessed from a surrounding of the portion. However, the configuration of the thin part is not limited to this. FIG. 8 is a view according to a second embodiment and corresponding to FIG. 5. As shown in FIG. 8, in the second embodiment, a thin part 214s includes a portion (hereinafter called a "second groove portion 214f') formed on an inner surface side of a sealing plate 214 into a groove shape recessed from a surrounding of the portion. The configuration other than this point may be similar to that of the first embodiment and detailed description of such a configuration will be omitted.

Here, as shown in FIG. 8, the second groove portion 214f has a shape recessed to a predetermined groove depth d₂ from the inner surface side toward the outer surface side of the sealing plate 214. The second groove portion 214f may be formed into a substantially ring-like shape along an edge of a terminal fit hole 218. The second groove portion 214f is a portion where a region having the predetermined groove depth d₂ extends to a predetermined length L₂ in a radial direction at a periphery 218a of the terminal fit hole 218. By providing the second groove portion 214f recessed from the surrounding of the second groove portion 214f at the periphery 218a of the terminal fit hole 218 of the sealing plate 214 and on the inner surface side of the sealing plate 214, it becomes possible to reduce rigidity at an integrally-molded part. This makes it possible to reduce a difference in rigidity between the integrally-molded part and a part not involved in the integral molding.

As shown in FIG. 8, a part of a sealing plate inner surface side 232 of a collector terminal 230 is preferably arranged in the second groove portion 214f formed into a groove shape. The part of the sealing plate inner surface side 232 of the collector terminal 230 is arranged at a position facing the second groove portion 214f of the sealing plate 214 across an insulating member 240. In a collector terminal-sealing plate assembly, apparent rigidity is likely to become high particularly in a region where the sealing plate 214 and the collector terminal 230 face each other. The apparent rigidity can be reduced by providing the sealing plate 214 with the second groove portion 214f in this region to reduce a total volume of the sealing plate 214 and the collector terminal 230. Thus, by providing the thin part 214s including the second groove portion 214f at the periphery of the terminal fit hole 218 and on the inner surface 214a of the sealing plate 214 and arranging a part of the collector terminal 230 in the second groove portion 214f, it becomes possible to reduce a difference in rigidity in the collector terminal-sealing plate assembly, thereby achieving improvement of rupture strength.

As shown in FIG. 8, if a secondary battery 200 includes a collector 250 extending in the long side direction Y, at least a part of the collector 250 (more specifically, a first collector unit 251) is preferably arranged in the second groove portion 214f. More preferably, the first collector unit 251 is arranged in the second groove portion 214f in an entire region where the first collector unit 251 and the sealing plate 214 face each other. By doing so, a total volume of the sealing plate 214 and the collector 250 is reduced also in the region where the collector 250 and the sealing plate 214 face each other to allow reduction in a difference in rigidity in the collector terminal-sealing plate assembly.

The groove depth d₂ of the second groove portion 214f (a maximum length in a direction conforming to a thickness direction of the sealing plate 214) may be set properly in response to battery design and is not particularly limited. For example, with an average thickness of the sealing plate inner surface side 232 of the collector terminal 230 (an average length in the top-bottom direction Z) defined as t₄, the groove depth d₂ of the second groove portion 214f is preferably d₂ ≥ (1/5) × t₄, more preferably, d₂ ≥ (1/2) × t₄, and may be d₂ = t₄ (namely, the groove depth d₂ of the second groove portion 214f is equal to the thickness t₄ of the sealing plate inner surface side 232). By setting the groove depth d₂ of the second groove portion 214f equal to or greater than 1/5 of the thickness t₄ of the sealing plate inner surface side 232, the foregoing effect by reducing the total volume can be exerted sufficiently, making it possible to suppress increase in apparent rigidity favorably. While an upper limit of the groove depth d₂ is not particularly limited, d₂ ≤ 2 × t₄ is preferred, and d₂ ≤ 1.5 × t₄ is more preferred.

While not particularly limited, with an average thickness (an average length in the top-bottom direction Z) of the collector 250 (more specifically, the first collector unit 251) defined as t₅, the groove depth d₂ of the second groove portion 214f is preferably equal to or greater than 1/5 of a sum of the thickness t₄ of the sealing plate inner surface side 232 and the thickness t₅ of the first collector unit 251. Specifically, d₂ ≥ (1/5) × (t₄ + t₅) is preferred. The groove depth d₂ of the second groove portion 214f is preferably (1/5) × (t₄ + t₅) ≤ d₂ ≤ (t₄ + ts), for example, more preferably, (1/2) × (t₄ + t₅) ≤ d₂ ≤ (t₄ + t₅). By doing so, it becomes possible to reduce a difference in rigidity in the collector terminal-sealing plate assembly favorably. As a more specific example, the groove depth d₂ of the second groove portion 214f may approximately be from 0.2 to 1.9 mm (preferably, from 0.5 to 1 mm).

The maximum length L₂ of the second groove portion 214f in the radial direction is not particularly limited but is preferably a length allowing the sealing plate inner surface side 232 of the collector terminal 230 to be arranged in the second groove portion 214f. If the secondary battery 200 has the collector 250 extending in the long side direction Y, the maximum length L₂ of the second groove portion 214f is preferably a length allowing the sealing plate inner surface side 232 of the collector terminal 230 and the collector 250 to be arranged in the second groove portion 214f. As a specific example, the maximum length L₂ of the second groove portion 214f may approximately be from 1 to 10 mm (preferably, from 2 to 8 mm).

In the collector terminal-sealing plate assembly where the collector terminal 230 and the sealing plate 214 are molded integrally, a roughened area 214r resulting from roughening treatment is preferably arranged in at least a part of surfaces of the sealing plate 214 and the collector terminal 230. The roughened area 214r may be arranged in the sealing plate 214. Preferably, the roughened area 214r is arranged in at least a part of a surface of the thin part 214s contacting the insulating member 240, for example. The roughened area 214r may be arranged in the surface of the thin part 214s entirely where the thin part 214s and the insulating member 240 contact each other. In the roughened area 214r, the anchor effect is fulfilled as described above so rigidity is likely to increase particularly in the roughened area 214r. Arranging the roughened area 214r and the thin part 214s at positions overlapping each other makes it possible to reduce a difference in rigidity in the collector terminal-sealing plate assembly. This allows improvement of rupture strength while ensuring joining performance or hermeticity of the collector terminal-sealing plate assembly sufficiently, making it possible to provide a power storage device with more excellent safety.

The roughened area 214r may be arranged in the collector terminal 230. If the roughened area 214r is provided in the collector terminal 230, the roughened area 214r is preferably arranged at a position at least overlapping the thin part 214s in the top-bottom direction Z. For example, the roughened area 214r is preferably provided in a surface of the sealing plate inner surface side 232 of the collector terminal 230 and at a position facing the sealing plate 214 across the insulating member 240. This makes it possible to realize improvement of hermeticity of the collector terminal-sealing plate assembly and improvement of rupture strength of the battery.

While not particularly limited, the roughened area 214r may be arranged in both the sealing plate 214 and the collector terminal 230. For example, the roughened area 214r is preferably provided in the surface of the thin part 214s contacting the insulating member 240 and in the surface of the sealing plate inner surface side 232 of the collector terminal 230 and at the position facing the sealing plate 214 across the insulating member 240. This makes it possible to reduce a difference in rigidity in the collector terminal-sealing plate assembly while further ensuring performance of joining or hermeticity between the collector terminal 230 and the sealing plate 214.

While not particularly limited, the roughened area 214r may be arranged in the collector 250. More specifically, the roughened area 214r is preferably provided in a surface of the first collector unit 251 and at a position facing the thin part 214s across the insulating member 240. This makes it possible to reduce rigidity favorably in a region where the collector terminal 230, the sealing plate 214, and the collector 250 overlap each other, thereby achieving improvement of rupture strength.

The secondary battery 200 can be produced by a method substantially the same as that of the first embodiment. More specifically, the method may include a step of preparing the sealing plate 214, the collector terminal 230, and other required members, a step of integrally molding the sealing plate 214 and the collector terminal 230, and a step of assembling the collector terminal-sealing plate assembly resulting from the integral molding and a case body. In fitting the collector terminal 230 in the terminal fit hole 218 of the sealing plate 214, the collector terminal 230 may be inserted from a sealing plate outer surface side 231.

### <Third Embodiment>

As an example, in the first embodiment, the thin part 14s includes a portion (first groove portion 14e) formed on the outer surface side of the sealing plate 14 into a groove shape recessed from a surrounding of the portion. In the second embodiment, the thin part 214s includes a portion (second groove portion 214f) formed on the inner surface side of the sealing plate 214 into a groove shape recessed from a surrounding of the portion. However, the configuration of the thin part is not limited to these. FIG. 9 is a view according to a third embodiment and corresponding to FIG. 5. As shown in FIG. 9, in the third embodiment, a thin part 314s includes a portion (first groove portion 314e) formed on an outer surface side of a sealing plate 314 into a groove shape recessed from a surrounding of the portion, and a portion (second groove portion 314f) formed on an inner surface side of the sealing plate 314 into a groove shape recessed from a surrounding of the portion. The configuration other than these points may be similar to those of the first embodiment and the second embodiment or that of the first embodiment or the second embodiment and detailed description of such a configuration will be omitted.

As shown in FIG. 9, the first groove portion 314e has a shape recessed from the outer surface side toward the inner surface side of the sealing plate 314. The second groove portion 314f has a shape recessed from the inner surface side toward the outer surface side of the sealing plate 314. By providing both the first groove portion 314e and the second groove portion 314f recessed from the surroundings of the first groove portion 314e and the second groove portion 314f at an inner surface 314a and an outer surface 314b of the sealing plate 314, it becomes possible to reduce a total volume further in a part where the sealing plate 314 and a collector terminal 330 are integrally molded across an insulating member 340. This makes it possible to reduce a difference in rigidity further between the integrally-molded part and a part not involved in the integral molding, so that rupture strength can be improved.

The first groove portion 314e on the outer surface side of the sealing plate 314 and the second groove portion 314f on the inner surface side of the sealing plate 314 may be formed in regions overlapping each other in the top-bottom direction Z. In this case, the first groove portion 314e and the second groove portion 314f are formed in such a manner that a sum of a maximum groove depth d₃ of the first groove portion 314e (a maximum length in a direction conforming to a thickness direction of the sealing plate 314) and a maximum groove depth d₄ of the second groove portion 314f (a maximum length in the direction conforming to the thickness direction of the sealing plate 314) is less than an average thickness t₆ of the sealing plate 314. For example, (d₃ + d₄) < t₆ and (d₃ + d₄) ≤ (2/3) × t₆ are preferred. This range is preferred also from the viewpoint of ensuring strength of equal to or greater than a certain level at a periphery 318a of a terminal fit hole 318. From the viewpoint of reducing a total volume, (d₃ + d₄) ≥ (2/5) × t₆ is preferred and (d₃ + d₄) ≥ (1/2) × t₆ is more preferred. By providing the thin part 314s including the first groove portion 314e and the second groove portion 314f at the periphery 318a of the terminal fit hole 318 in such a manner as to fall within these ranges, it becomes possible to provide a power storage device with a higher level of safety. The groove depth d₃ of the first groove portion 314e and the groove depth d₄ of the second groove portion 314f may be equal to or different from each other. Furthermore, a maximum length L₃ of the first groove portion 314e in a radial direction and a maximum length L₄ of the second groove portion 314f in the radial direction are not particularly limited. The maximum length L₃ and the maximum length L₄ may be equal to or different from each other. These groove depths or maximum lengths of the first groove portion 314e and the second groove portion 314f are properly adjustable in response to the shape of the collector terminal 330, etc.

In a collector terminal-sealing plate assembly where the collector terminal 330 and the sealing plate 314 are molded integrally, a roughened area 314r resulting from roughening treatment is preferably arranged in at least a part of surfaces of the sealing plate 314 and the collector terminal 330. In the illustrated example in FIG. 9, the roughened area 314r is arranged both in the sealing plate 314 and the collector terminal 330 at the periphery of the terminal fit hole 318. More specifically, the roughened area 314r is preferably arranged in a surface of the thin part 314s contacting the insulating member 340, in a surface of a sealing plate outer surface side 331 of the collector terminal 330 and at a position facing the thin part 314s across the insulating member 340, and in a surface of a sealing plate inner surface side 332 of the collector terminal 330 and at a position facing the thin part 314s across the insulating member 340. By arranging the first groove portion 314e, the second groove portion 314f, and the roughened area 314r in overlapping regions, it becomes possible to reduce a difference in rigidity favorably between the integrally-molded part and a part not involved in the integral molding.

A secondary battery 300 having the above-described configuration can be produced by a method substantially the same as that of the first embodiment. More specifically, the method may include a step of preparing the sealing plate 314, the collector terminal 330, and other required members, a step of integrally molding the sealing plate 314 and the collector terminal 330, and a step of assembling the collector terminal-sealing plate assembly resulting from the integral molding and a case body. In fitting the collector terminal 330 in the terminal fit hole 318 of the sealing plate 314, the collector terminal 330 can become inserted in the terminal fit hole 318 as shown in FIG. 9 by passing the collector terminal 330 through the terminal fit hole 318 while tilting the sealing plate outer surface side 331 or the sealing plate inner surface side 332.

### <Fourth Embodiment>

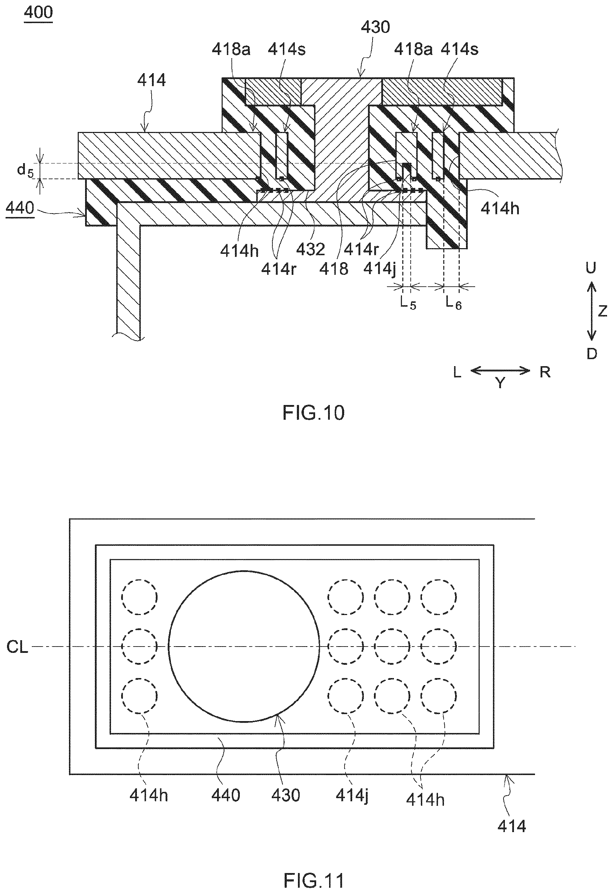

As an example, in the first to third embodiments, the thin part includes a portion (first groove portion) formed on the outer surface side of the sealing plate into a groove shape recessed from a surrounding of the portion and/or a portion (second groove portion) formed on the inner surface side of the sealing plate into a groove shape recessed from a surrounding of the portion. However, the configuration of the thin part is not limited to these. FIG. 10 is a view according to a fourth embodiment and corresponding to FIG. 5. As shown in FIG. 10, in the fourth embodiment, a thin part 414s has a non-through hole 414j or a through hole 414h on an outer surface side and/or an inner surface side of a sealing plate 414. The configuration other than this point may be similar to that of the first embodiment and detailed description of such a configuration will be omitted.

FIG. 11 is a plan view schematically showing a collector terminal-sealing plate assembly 414A according to the fourth embodiment. As shown in FIGS. 10 and 11, in the fourth embodiment, the thin part 414s is defined by the non-through hole 414j and/or the through hole 414h formed at a periphery of a terminal fit hole 418. Forming the non-through hole 414j and/or the through hole 414h reduces the volume of the thin part 414s relatively in the sealing plate 414. This suppresses stress concentration in a region of relatively low rigidity so the occurrence of rupture of a battery case can be reduced.

In the fourth embodiment, the thin part 414s may be defined only by the non-through hole 414j, only by the through hole 414h, or both by the non-through hole 414j and the through hole 414h. The non-through hole 414j and the through hole 414h are arranged in a region where the sealing plate 414 and an insulating member 440 contact each other. While the number of the non-through holes 414j may be one, it is preferable that a plurality of the non-through holes 414j be arranged in the region where the sealing plate 414 and the insulating member 440 contact each other. While the number of the through holes 414h may be one, it is preferable that a plurality of the through holes 414h be arranged in the region where the sealing plate 414 and the insulating member 440 contact each other. By doing so, it becomes possible to reduce a difference in rigidity more favorably between an integrally-molded part and a part not involved in the integral molding in the collector terminal-sealing plate assembly.

If the number of the formed non-through holes 414j and that of the formed through holes 414h are both two or more, positions where the non-through holes 414j are formed and positions where the through holes 414h are formed are not particularly limited as long as these positions are in the region where the sealing plate 414 and the insulating member 440 contact each other. Preferably, the non-through holes 414j and/or the through holes 414h are arranged substantially uniformly in the region where the sealing plate 414 and the insulating member 440 contact each other. More specifically, as shown in FIG. 11, the non-through holes 414j and/or the through holes 414h may be arranged symmetrically with respect to a center line CL in a short side direction of the sealing plate 414. This suppresses stress concentration in a part without the non-through hole 414j or the through hole 414h.

It is preferable that a plurality of the non-through holes 414j be formed at a predetermined interval (pitch) around the terminal fit hole 418 into a predetermined depth d₅. In the illustrated example in FIG. 10, the non-through hole 414j is formed on an inner surface side of the sealing plate 414. Alternatively, the non-through hole 414j may be formed on an outer surface side of the sealing plate 414. The non-through hole 414j may have a perfect circle shape, an oval shape, a quadrangular shape, or a hexagonal shape in a plan view, for example. Of these shapes, a perfect circle shape is preferred from the viewpoint of reducing the volume of the sealing plate 414 favorably. While a maximum diameter L₅ of the non-through hole 414j is not particularly limited, it may approximately be from 0.05 to 0.5 mm, for example. The maximum depth d₅ of the non-through hole 414j (a maximum length in a direction along the terminal fit hole 418) is not particularly limited as long as it is less than an average thickness t₅ of the sealing plate 414. The maximum depth d₅ of the non-through hole 414j may be controlled properly so as to provide the sealing plate 414 with intended strength. As an example, the maximum depth d₅ of the non-through hole 414j may approximately be from 0.1 to 1 mm.

The through hole 414h is a part penetrating the sealing plate 414 in a thickness direction from the outer surface side toward the inner surface side. It is preferable that a plurality of the through holes 414h be formed at a predetermined interval (pitch) around the terminal fit hole 418. A maximum diameter L₆ of the through hole 414h is not particularly limited. The maximum diameter L₆ of the through hole 414h may substantially be equal to the maximum diameter L₅ of the non-through hole 414j. More specifically, the maximum diameter L₆ of the through hole 414h may approximately be from 0.05 to 0.5 mm, for example.

In the configuration where the thin part 414s includes the non-through hole 414j and/or the through hole 414h, a roughened area 414r resulting from roughening treatment is preferably arranged in at least a part of a surface of a collector terminal 430. Preferably, the roughened area 414r is arranged in a surface of a sealing plate inner surface side 432 of the collector terminal 430 and at a position where the collector terminal 430 and the sealing plate 414 face each other across the insulating member 440, for example. The roughened area 414r may be arranged in such a manner as to surround the non-through hole 414j and/or the through hole 414h individually. Locating the thin part 414s and the roughened area 414r at positions overlapping each other makes it possible to improve rupture strength while ensuring joining performance or hermeticity of the collector terminal-sealing plate assembly sufficiently, making it possible to provide a power storage device with more excellent safety.

In the fourth embodiment, the non-through hole 414j and/or the through hole 414h may be provided in a region other than the roughened area 414r. More specifically, the non-through hole 414j and/or the through hole 414h may be provided in a region where the insulating member 440 and the sealing plate 414 contact each other, which is a region other than the roughened area 414r. Arranging the non-through hole 414j and/or the through hole 414h in the region other than the roughened area 414r allows a place where rigidity is to change sharply to be divided into a plurality of sections. As a result, stress concentration is relaxed.

A secondary battery 400 having the above-described configuration can be produced by a method substantially the same as that of the first embodiment, More specifically, the method may include a step of preparing the sealing plate 414, the collector terminal 430, and other required members, a step of integrally molding the sealing plate 414 and the collector terminal 430, and a step of assembling the collector terminal-sealing plate assembly resulting from the integral molding and a case body. The non-through hole 414j and the through hole 414h can be produced by a conventional publicly-known method such as laser machining, drilling, or etching, for example.

While some embodiments of the present disclosure have been described above, the embodiments are mere examples. The present disclosure can be carried out in various other embodiments. The present disclosure can be carried out on the basis of the contents disclosed in the present specification and technical knowledge in the pertinent field. The technology described in the claims include various modifications and changes from the embodiments described above as examples. For example, it is possible to replace some of the embodiments with other modifications or add other modifications to the embodiments. Unless one technical feature is described as being essential, this feature can be eliminated, as appropriate.

As described above, specific configurations of the technology disclosed herein can be provided in each of the following items.

Item 1: A power storage device including: a case body having an opening part; a sealing plate having a terminal fit hole and closing the opening part; an electrode body accommodated inside the case body; a collector terminal having one end electrically connected to the electrode body inside the case body and the other end exposed on an outer surface side of the sealing plate; and an insulating member arranged between the sealing plate and the collector terminal, wherein the insulating member is arranged at a periphery of the terminal fit hole of the sealing plate while being molded integrally with a peripheral portion of the terminal fit hole and the collector terminal, and at least one part of the periphery of the terminal fit hole of the sealing plate forms a thin part thinner than a surrounding of the one part.

Item 2: The power storage device according to Item 1, wherein the thin part includes a portion formed on the outer surface side of the sealing plate into a groove shape recessed from a surrounding of the portion, and a part of a sealing plate outer surface side of the collector terminal is arranged in the recessed groove portion.

Item 3: The power storage device according to Item 1 or 2, wherein the thin part includes a portion formed on an inner surface side of the sealing plate into a groove shape recessed from a surrounding of the portion, and a part of a sealing plate inner surface side of the collector terminal is arranged in the recessed groove portion.

Item 4: The power storage device according to any one of Items 1 to 3, wherein the thin part has a non-through hole or a through hole formed on the outer surface side of the sealing plate and/or an inner surface side of the sealing plate.

Item 5: The power storage device according to any one of Items 1 to 4, wherein a roughened area having more irregularities than a surface of a surrounding of the roughened area is provided in a surface of the thin part contacting the insulating member and/or a surface of the collector terminal facing the thin part across the insulating member.

## Claims

1. A power storage device comprising:
a case body (12) having an opening part (12h);
a sealing plate (14) having a terminal fit hole (18) and sealing the opening part (12h);
an electrode body (20) accommodated inside the case body (12);
a collector terminal (30) having one end electrically connected to the electrode body (20) inside the case body (12) and the other end exposed on an outer surface side of the sealing plate (14); and
an insulating member (40) arranged between the sealing plate (14) and the collector terminal (30), wherein
the insulating member (40) is arranged at a periphery of the terminal fit hole (18) of the sealing plate (14) while being molded integrally with a peripheral portion of the terminal fit hole (18) and the collector terminal (30), and
at least one part of the periphery of the terminal fit hole (18) of the sealing plate (14) forms a thin part (14s) thinner than a surrounding of the one part.

2. The power storage device according to claim 1, wherein
the thin part (14s) includes a portion formed on the outer surface side of the sealing plate (14) into a groove shape recessed from a surrounding of the portion, and
a part of a sealing plate outer surface side (31) of the collector terminal (30) is arranged in the recessed groove portion.

3. The power storage device according to claim 1 or 2, wherein
the thin part (14s) includes a portion formed on an inner surface side of the sealing plate (14) into a groove shape recessed from a surrounding of the portion, and
a part of a sealing plate inner surface side (32) of the collector terminal is arranged in the recessed groove portion.

4. The power storage device according to any one of claims 1 to 3, wherein
the thin part (14s) has a non-through hole (414j) or a through hole (414h) formed on the outer surface side of the sealing plate (14) and/or an inner surface side of the sealing plate (14).

5. The power storage device according to any one of claims 1 to 4, wherein
a roughened area (14r) having more irregularities than a surface of a surrounding of the roughened area (14r) is provided in a surface of the thin part (14s) contacting the insulating member (40) and/or a surface of the collector terminal (30) facing the thin part (14s) across the insulating member (40).
